**Europäisches Patentamt**

**European Patent Office**

**Office européen des brevets**

(11) Numéro de publication : **0 196 273 B1**

(12) **FASCICULE DE BREVET EUROPÉEN**

(45) Date de publication du fascicule du brevet :
26.04.89

(51) Int. Cl.⁴ : **F 16 K 31/06**

(21) Numéro de dépôt : **86810075.1**

(22) Date de dépôt : **11.02.86**

(54) Electrovalve à plusieurs débits.

(30) Priorité : **18.03.85 CH 1184/85**

(43) Date de publication de la demande :
**01.10.86 Bulletin 86/40**

(45) Mention de la délivrance du brevet :
**26.04.89 Bulletin 89/17**

(84) Etats contractants désignés :
**DE FR GB IT NL SE**

(56) Documents cités :
**EP-A- 0 005 395**
**FR-A- 2 110 603**
**FR-A- 2 249 275**

(73) Titulaire : **HONEYWELL LUCIFER SA**
**16, chemin du Faubourg-de-Cruseilles**
**CH-1227 Carouge (Genève) (CH)**

(72) Inventeur : **Ramillon, Jean-Pierre**
**Route de Saint-Julien 289c**
**CH-1258 Perly Geneve (CH)**

(74) Mandataire : **Ardin, Pierre**
**PIERRE ARDIN & CIE 22, rue du Mont-Blanc Case**
**postale 60**
**CH-1211 Genève 1 (CH)**

## Description

On connaît déjà des électrovalves comprenant un corps, un noyau magnétique fixe et un noyau magnétique mobile déplaçable contre l'action d'un premier ressort sous l'effet d'un champ magnétique engendré par un enroulement électrique, le noyau mobile agissant sur un organe obturateur coopérant avec un orifice de passage d'un fluide, comprenant des moyens de butée élastique coopérant avec le noyau mobile pour déterminer au moins une position d'arrêt intermédiaire de ce noyau mobile dans sa course pour permettre d'obtenir au moins deux débits différents.

Des valves de ce genre sont décrites dans le brevet français N° 211 06 03, la demande de brevet français 2 249 275 et dans la demande de brevet européen N° 0 005 395. Ces valves connues sont assez volumineuses et l'invention a pour but d'offrir une telle valve de construction très fiable et plus compacte.

A cet effet, l'électrovalve selon l'invention est caractérisée en ce que les moyens de butée élastique comprennent un deuxième ressort et une pièce de butée mobile contre l'action de celui-ci, logés dans un évidement axial d'un des noyaux, cet évidement étant ouvert en regard d'une butée fixe portée par l'autre noyau.

Le dessin annexé représente, schématiquement et à titre d'exemple, deux formes d'exécution de la valve faisant l'objet de l'invention :

La figure 1 est une coupe verticale montrant simultanément deux positions de travail de la valve selon la première forme d'exécution.

La figure 2 est une coupe verticale illustrant la seconde forme d'exécution et représente la valve susceptible de contrôler trois débits différents.

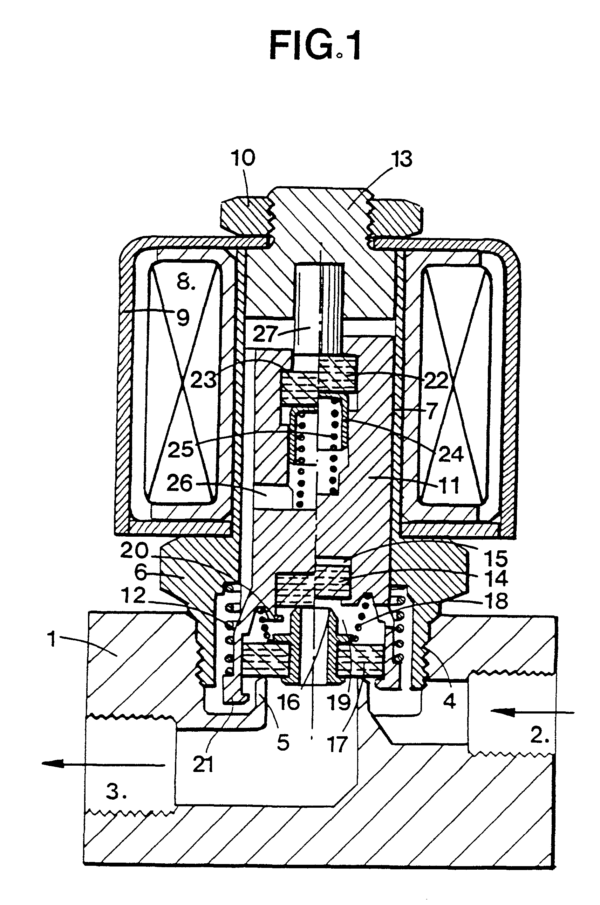

La valve selon la figure 1 comprend un corps 1 avec un passage d'entrée 2 et un passage de sortie 3. A sa partie supérieure, le corps 1 présente un alésage fileté 4 au-dessus d'un siège 5 qui est disposé entre les passages 2 et 3. L'alésage fileté 4 est destiné à recevoir l'embase filetée 6 d'un tube 7 en matière non magnétique, ce tube portant une bobine d'excitation 8 recouverte par un capuchon 9 ferromagnétique retenu par un écrou 10.

Un noyau mobile 11 en matière ferromagnétique est monté coulissant dans le tube 7 et poussé vers le bas par l'action d'un ressort 12. De façon connue, ce noyau est destiné à se déplacer vers le noyau ferromagnétique fixe 13, monté dans l'extrémité supérieure du tube 7.

A sa partie inférieure, le noyau mobile 11 comprend un organe obturateur constitué par le clapet 14 monté avec jeu dans un évidement 15. Ce clapet 14 est destiné à venir obturer un siège 16 mobile, porté lui-même par un clapet 17 venant coopérer avec le siège 5. Le clapet 17 est pressé sur le pourtour du siège 5 par un ressort 18 prévu dans un logement 19 dans lequel le clapet 17 peut se déplacer. Les logements 15 et 19 du noyau mobile 11 présentent à leur partie inférieure un épaulement 20 respectivement 21 pour retenir les clapets 14 et 17 dans leur logement respectif.

A sa partie supérieure, le noyau mobile 11 comprend une butée élastique formée par une rondelle 22 en élastomère poussée contre un rebord annulaire 23 par un piston 24 soumis à l'action d'un ressort 25. Le logement dans lequel est placée cette butée élastique communique avec l'espace entourant le noyau mobile 11 grâce à un perçage radial 26 débouchant au fond dudit logement.

La partie gauche montre la valve en position de fermeture, chacun des deux clapets appuyant sur son siège respectif. La rondelle 22 est appuyée contre le rebord 23 sous l'action d'un ressort 25, qui est précontraint. Lorsqu'on fait passer un courant électrique dans la bobine 8 suffisant pour provoquer le déplacement du noyau 11 contre l'action de son ressort 12, l'épaulement 20 vient coopérer avec le clapet 14 et le décolle de son siège 16. Ce déplacement du noyau 11 se poursuit jusqu'au moment où la rondelle 22 vient buter contre un téton fixe 27 solidaire du noyau fixe 13. A ce moment le clapet 14 a découvert son siège 16 et se trouve dans une position d'arrêt intermédiaire, ce qui ouvre un passage de section déterminé entre les passages 2 et 3, et fixe ainsi un premier débit de la valve.

Lorsqu'on augmente le courant d'excitation pour atteindre une valeur suffisante pour que l'attraction magnétique du noyau 11 surmonte la poussée du ressort 25, ce noyau effectue la seconde partie de sa course en soulevant le clapet 17 de son siège 5, et poursuit son mouvement jusqu'à ce qu'il bute contre le noyau 13. La section libre entre les passages 2 et 3 atteint alors une valeur plus grande, ce qui fixe un second débit pour la valve.

Il y a lieu de remarquer qu'à chaque déplacement du noyau mobile 11 vers le noyau fixe 13, il se produit une diminution de l'entrefer et, par conséquent, une augmentation du champ magnétique. Il en résulte que dès que l'attraction magnétique est suffisante pour commencer à comprimer le ressort 12, cette attraction augmente tout de suite par l'effet de la diminution de l'entrefer et comme le ressort 12 exerce une force sensiblement constante, le déplacement du noyau 11 est fait très rapidement. De même, lorsque l'attraction magnétique permet de vaincre la force du ressort 25, il se produit une nouvelle diminution de l'entrefer accompagnée d'une augmentation rapide de l'attraction magnétique. Il en résulte que le déplacement du noyau se produit par deux sauts successifs et qu'en choisissant convenablement la force du ressort 12 et la contrainte initiale du ressort 25, on peut obtenir des conditions stables du premier siège 16 dans une plage relativement grande du courant d'excitation. Ainsi, à titre d'exemple, on peut obtenir que seul le premier siège soit découvert pour un courant variant dans un rapport de 1 à 6 et même d'avantage.

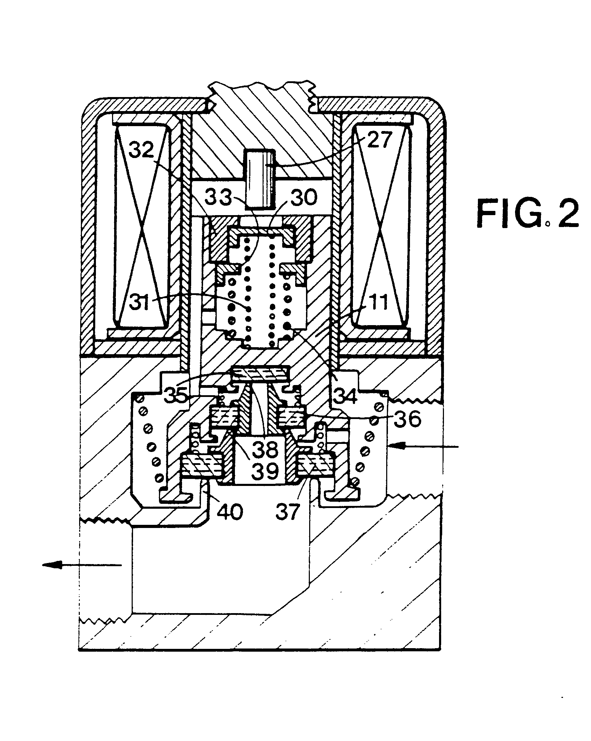

La figure 2 montre une autre forme d'exécution utilisant le même principe que la valve selon la figure 1 tout en permettant d'obtenir trois réglages du débit. Dans cette variante, la butée élastique est une butée à deux étages qui comprend une cuvette inversée 30, soumise à l'action d'un ressort 31 qui la pousse contre un rebord d'une pièce de retenue 32. En dessous de cette pièce 32 se trouve une seconde cuvette inversée 33, soumise à l'action d'un ressort 34.

La partie inférieure du noyau mobile 11 comporte trois clapets d'obturation 35, 36 et 37, coopérant chacun avec un siège 38, 39 et 40.

Pour une première plage d'excitation, le noyau mobile 11 se déplace jusqu'à ce que la cuvette 30 vienne buter contre le téton fixe 27, ce qui assure l'ouverture du siège 38. Au-dessus d'une première valeur critique et pour une seconde plage du courant, l'attraction magnétique surmonte la force de rappel du ressort 31 et la cuvette 30 vient buter contre la cuvette 33. Toutefois, la force du ressort 34 n'est pas encore surmontée par l'attraction magnétique et l'on obtient ainsi une position stable d'ouverture des sièges 38 et 39. Enfin, lorsque le courant dépasse une deuxième valeur critique, la force du ressort 34 est surmontée et le noyau 11 effectue la dernière partie en soulevant le clapet 37 de son siège 40.

On peut, bien entendu, prévoir de nombreuses variantes de réalisation et notamment la butée élastique, qui est prévue à l'intérieur de la partie supérieure du noyau mobile 11 dans le cas des figures 1 et 2, pourrait aussi être prévue dans le noyau fixe, la partie supérieure du noyau 11 étant alors conventionnelle. On pourrait aussi prévoir des butées constituées de façon différente, par exemple constituées par des lames élastiques. Enfin, dans la cas où l'on utilise plusieurs butées élastiques, on pourrait très bien prévoir une butée élastique dans la partie supérieure du noyau mobile, comme dans le cas de la figure 2, et une autre butée constituée par le téton 27 qui serait alors déplaçable contre l'action d'un ressort dans le noyau fixe.

## Revendications

1. Electrovalve comprenant un corps (1), un noyau magnétique fixe (13) et un noyau magnétique mobile (11) déplaçable contre l'action d'un premier ressort (12) sous l'effet d'un champ magnétique engendré par un enroulement électrique (8), le noyau mobile (11) agissant sur un organe obturateur (17) coopérant avec un orifice (5) de passage d'un fluide, comprenant des moyens de butée élastique (22 à 25) coopérant avec le noyau mobile (11) pour déterminer au moins une position d'arrêt intermédiaire de ce noyau mobile dans sa course pour permettre d'obtenir au moins deux débits différents, caractérisée en ce que les moyens de butée élastique comprennent un deuxième ressort (25) et une pièce de butée mobile (22) contre l'action de celui-ci, logés dans un évidement axial d'un des noyaux (11 ou 13), cet évidement étant ouvert en regard d'une butée fixe (27) portée par l'autre noyau.

2. Electrovalve selon la revendication 1, caractérisée en ce que le noyau mobile (11) présente un logement (19) dans lequel un premier clapet (17) est monté avec jeu, ce clapet (17) étant déplaçable sous l'action d'un troisième ressort (18) le sollicitant en direction du siège (5) correspondant.

3. Electrovalve selon la revendication 2, caractérisée en ce que ledit clapet (17) présente un orifice central dont le bord opposé audit siège (5) constitue un deuxième siège (16), ledit logement (19) contenant un deuxième clapet (14) coopérant avec ce deuxième siège (16), ce deuxième clapet (14) étant commandé par le noyau mobile (11), la course du premier clapet (17) dans le logement étant suffisante pour que, dans une première partie du déplacement du noyau mobile (11), le premier clapet (17) reste appliqué contre son siège (5), tandis que le deuxième clapet (14) découvre l'orifice de ce premier clapet (17).

4. Electrovalve selon la revendication 3, caractérisée en ce que le deuxième clapet (14) est axialement déplaçable à l'intérieur d'un deuxième logement (15) du noyau mobile (11).

5. Electrovalve selon l'une des revendications 2 à 4, caractérisée en ce que le noyau mobile (11) est déplaçable dans une chambre communiquant avec une source de fluide sous pression, le siège (5) du premier clapet (17) conduisant à la sortie (3) du fluide de la valve.

6. Electrovalve selon la revendication 5, caractérisée en ce que le logement dans lequel est monté le premier clapet (17) communique par un passage (26) prévu dans le noyau mobile (11) avec l'espace entourant ce noyau, cet espace communiquant lui-même avec l'alimentation (2) en fluide de la valve.

## Claims

1. Solenoid valve comprising a body (1), a stationary magnetic core (13) and a movable magnetic core (11) shiftable counter to the action of a first spring (12) under the effect of a magnetic field generated by an electrical winding (8), the movable core (11) acting on a shutter member (17) interacting with a port (5) for the passage of a fluid, and possessing elastic stop means (22 to 25) interacting with the movable core (11) in order to determine at least one intermediate stopping position of this movable core in its travel, so as to make it possible to obtain at least two different flow rates, characterized in that the elastic stop means comprise a second spring (25) and a stop piece (22) movable counter to the action of the latter, these being seated in an axial recess of one of the cores (11 or 13), and this recess being open opposite a stationary stop (27) carried by the other core.

2. Solenoid valve according to claim 1, characterized in that the movable core (11) has a receptacle (19), in which a first shutter (17) is mounted with play, this shutter (17) being shiftable under the action of a third spring (18) stressing it towards the corresponding seat (5).

3. Solenoid valve according to claim 2, characterized in that the said shutter (17) has a central orifice, of which the edge opposite the said seat (5) forms a second seat (16), the said receptacle (19) containing a second shutter (14) interacting with the second seat (16), this second shutter (14) being controlled by the movable core (11), and the travel of the first shutter (17) in the receptacle being sufficient to ensure that, over a first portion of the shift of the movable core (11), the first shutter (17) remains laid against its seat (5), whilst the second shutter (14) exposes the orifice of this first shutter (17).

4. Solenoid valve according to claim 3, characterized in that the second shutter (14) is axially shiftable within a second receptacle (15) of the movable core (11).

5. Solenoid valve according to one of claims 2 to 4, characterized in that the movable core (11) is shiftable in a chamber communicating with a source of fluid under pressure, the seat (5) of the first shutter (17) leading to the outlet (3) of the fluid from the valve.

6. Solenoid valve according to claim 5, characterized in that the receptacle, in which the first shutter (17) is mounted, communicates, via a passage (24) provided in the movable core (11), with the space surrounding this core, this space itself communicating with the supply (2) of fluid to the valve.

**Patentansprüche**

1. Elektroventil mit einem Gehäuse (1), einem ortsfesten Magnetkern (13) und einem beweglichen Magnetkern (11), der gegen die Kraft einer ersten Feder (12) unter der Wirkung eines durch eine elektrische Wicklung erzeugten Magnetfeldes verschiebbar ist, wobei der bewegliche Kern (11) auf ein mit einer Fluid-Durchgangsöffnung (5) zusammenwirkendes Schließorgan (17) einwirkt, mit elastischen Anschlagmitteln (22 bis 25), die mit dem beweglichn Kern (11) zusammenwirken, um wenigstens eine Zwischen-Stopposition des beweglichen Kernes während seines Hubes vorzugeben und wenigstens zwei unterschiedliche Durchflüsse zu ermöglichen, dadurch gekennzeichnet, daß die elastischen Anschlagmittel eine zweite Feder (25) und ein entgegenwirkendes bewegliches Anschlagstück (22) umfassen, die in einer axialen Ausnehmung eines der Kerne (11 oder 13) angeordnet sind, wobei diese Ausnehmung gegen einen festen Anschlag (27) geöffnet ist, der von dem anderen Kern getragen wird.

2. Elektroventil nach Anspruch 1, dadurch gekennzeichnet, daß der bewegliche Kern (11) eine Ausnehmung (19) vorgibt, in welcher ein erster Schließkörper (17) mit Spiel gelagert ist, wobei dieser Schließkörper (17) unter der Kraft einer dritten Feder (18) verschiebbar ist, die ihn in Richtung auf den zugehörigen Sitz (5) vorspannt.

3. Elektroventil nach Anspruch 2, dadurch gekennzeichnet, daß der Schließkörper (17) eine zentrale Öffnung aufweist, deren dem Sitz (5) gegenüberliegender Rand einen zweiten Sitz (16) bildet, wobei die genannte Ausnehmung, (19) einen zweiten Schließkörper (14) aufweist, der mit dem zweiten Sitz (16) zusammenwirkt, wobei der zweite Schließkörper (14) durch den beweglichen Kern (11) gesteuert wird und der Hub des ersten Schließkörpers (17) in der Ausnehmung ausreichend ist, um in einem ersten Teil der Verschiebung des beweglichen Kernes (11) den ersten Schliekörper (17) an seinem Sitz (5) anliegend zu halten, während der zweite Schließkörper (14) die Öffnung des ersten Schließkörpers (17) freigibt.

4. Elektroventil nach Anspruch 3, dadurch gekennzeichnet, daß der zweite Schließkörper (14) axial im Innern einer zweiten Ausnehmung (15) des beweglichen Kernes (11) verschiebbar ist.

5. Elektroventil nach einem der Ansprüche 2 bis 4, dadurch gekennzeichnet, daß der bewegliche Kern (11) in einer Kammer verschiebbar ist, die mit einer Fluid-Druckquelle in Verbindung steht, wobei der Sitz (5) des zweiten Schließkörpers (17) zum Fluid-Ausgang (3) des Ventils führt.

6. Elektroventil nach Anspruch 5, dadurch gekennzeichnet, daß die den ersten Schließkörper (17) aufweisende Ausnehmung über eine in dem beweglichen Kern (11) vorgesehene Bohrung (26) mit dem den Kern umgebenden Raum verbunden ist, wobei dieser Raum seinerseits mit der Fluid-Zuführung (2) des Ventils in Verbindung steht.

# FIG.1

FIG. 2